# EUROPÄISCHE PATENTSCHRIFT

(11) **EP 1 359 086 B1**
(45) Veröffentlichungstag und Bekanntmachung des Hinweises auf die Patenterteilung: **20.12.2006**
(21) Anmeldenummer: 03008745.6
(22) Anmeldetag: 17.04.2003
(51) Int. Cl.: B62D 55/084

(54) **Raupenfahrwerk, insbesondere für eine Baumaschine**
Tracklaying undercarriage, especially for a construction machine
Train de roulement à chenilles, en particulier pour engin de chantier

(30) Priorität: 02.05.2002 DE 20206970 U
(43) Veröffentlichungstag der Anmeldung: 05.11.2003
(73) Patentinhaber: BAUER Maschinen GmbH, 86529 Schrobenhausen (DE)
(72) Erfinder: Harthauser, Werner, 86637 Wertingen (DE)
(74) Vertreter: Wunderlich, Rainer

(56) Entgegenhaltungen:
- WO-A-97/31813
- DE-U- 20 206 970
- US-A- 3 712 398
- US-A- 5 489 114

## Beschreibung

Die Erfindung betrifft ein Raupenfahrwerk, insbesondere für eine Baumaschine, gemäß dem Oberbegriff des Anspruchs 1. Dieses ist unter anderem ausgebildet mit einem Mittelteil und zwei Raupenträgern mit je einer Raupenkette, wobei die Raupenträger entlang einer Längsrichtung zu beiden Längsseiten des Mittelteiles angeordnet und an Querträgern befestigt sind, die jeweils über mindestens eine Führung an dem Mittelteil in einer Verschieberichtung verschiebbar gelagert sind, und wobei mindestens ein Spannelement vorgesehen ist, mit dem ein Querträger gegenüber seiner Führung quer zur Verschieberichtung verspannbar ist. Ein derartiges Raupenfahrwerk ist zum Beispiel aus der US3712398 bekannt.

Derartige Raupenfahrwerke kommen vor allem bei Baumaschinen, wie Kränen und Greifern und insbesondere bei Erdbearbeitungsmaschinen, wie beispielsweise Baggern, Planierraupen usw., wegen der guten Geländegängigkeit zum Einsatz. Der Mittelteil des Raupenfahrwerks oder das Raupenfahrwerk als Ganzes wird dabei auch als Unterwagen bezeichnet. Die Raupenträger mit einer Raupenkette können auch als Raupenfahrschiffe bezeichnet werden.

Es ist bekannt, zur Verstellung der Spurbreite des Raupenfahrwerks die beiden Raupenträger an den Längsseiten eines Mittelteils quer zur Längsrichtung zu verschieben. Die Raupenfahrschiffe sind dabei teleskopierbar ausgebildet. So kann im Betrieb eine möglichst große Spurbreite eingestellt werden, was die Standfestigkeit der Baumaschine erhöht. Eine Verringerung der Spurbreite ist hingegen für einen Transport der Baumaschine von und zur Baustelle zweckmäßig. Eine Beschreibung eines solchen Raupenfahrwerks findet sich in der US-5,598,896.

Die Querträger, die das Mittelteil mit dem Dorn mit den beiden Raupenträgern oder Raupenfahrschiffen verbinden, können einen rechteckförmigen oder auch einen runden Querschnitt aufweisen.

Um die aus Bodenunebenheiten resultierenden Verwindungen der beiden Raupenfahrschiffe gegeneinander auszugleichen, ist bei runden, rohrförmigen Querträgern eine vergleichsweise aufwändige Gestaltung der Verbindungsstelle mit den Raupenfahrschiffen erforderlich.

Im Vergleich dazu können rechteckige Querträger zwar einfacher gestaltet werden, im ausgefahrenen Zustand weisen rechteckige Querträger aber tendenziell ein Passungsspiel zwischen Querträger und Führung des Querträgers im Mittelteil auf, das mit größeren Ausfahrbreiten zunimmt. Dieses Spiel wirkt sich nachteilig beim exakten Einrichten eines Erdbohrgerätes oder eines Rütteltraggerätes, beispielsweise eines Vibrationsbärs, aus. Die Einstellung eines präzisen Arbeitspunkts ist dann schwierig und das Gerät muss bei kinematischen und damit auch gewichtsmäßigen Verschiebungen von Baugruppen bewegt und der eingestellte Ansatzpunkt muss nachjustiert werden.

Die US 3,712,398 offenbart eine hydraulisch betätigbare Vorrichtung zum Verstellen der Spurbreite eines Raupenfahrzeuges. Die bekannte Vorrichtung weist einen Basisrahmen mit Hohlprofilen auf, in denen Arme längs verschiebbar angeordnet sind. An diesen Armen sind wiederum Raupenträger angeordnet. Nach der US 3,712,398 ist ein exzentrisches Klemmsystem vorgesehen, mit dem die Arme im Basisrahmen festgelegt werden können.

Ein Radfahrzeug mit veränderlicher Spurbreite ist aus der US 5,489,114 bekannt. Zum Verbinden zweier teleskopierbarer Achsträger ist nach der US 5,489,114 ein hydraulisch betätigbarer Stift vorgesehen.

**Aufgabe** der Erfindung ist es, ein Raupenfahrwerk der oben angegebenen Art zu schaffen, bei dem bei hoher Stabilität eine möglichst starre Verbindung zwischen Querträger und Mittelteil gewährleistet wird.

Diese Aufgabe wird durch das Raupenfahrwerk mit den Merkmalen des Anspruchs 1 gelöst.

Bevorzugte Ausführungsformen des erfindungsgemäßen Raupenfahrwerks sind in den abhängigen Ansprüchen angegeben.

Bei dem erfindungsgemäßen Raupenfahrwerk ist mindestens ein Spannelement vorgesehen, mit dem ein Querträger gegenüber seiner Führung quer zur Verschieberichtung verspannbar ist.

Ein Kerngedanke der Erfindung kann darin gesehen werden, dass, im Gegensatz zu den aus dem Stand der Technik bekannten Raupenfahrwerken, bei denen eine Fixierung der Querträger im Wesentlichen nur in Verschieberichtung erfolgt, nunmehr durch Spannelemente eine Verspannung quer zur Verschieberichtung bereitgestellt und damit eine sichere Fixierung gewährleistet wird.

Ein wesentlicher Vorteil der Erfindung ist darin zu sehen, dass mit konstruktiv einfachen Mitteln eine sichere starre Verbindung zwischen Querträger und Mittelteil erzielt wird, so dass ein Nachjustieren der Maschine, insbesondere beim Arbeiten mit einer Rütteleinrichtung, wie beispielsweise einem Vibrationsbär, wesentlich weniger häufig erforderlich ist als bei den bisher bekannten Raupenfahrwerken. Die entsprechenden Arbeitsgänge können dadurch auf der Baustelle in kürzerer Zeit und damit kostengünstiger bewältigt werden.

Bei einer besondere bevorzugten Ausführungsform des Raupenfahrwerks sind die Spannelemente als hydraulisch betätigbare Spannzylinder ausgebildet. Vorteile ergeben sich dabei hinsichtlich der hohen, durch Hydraulikzylinder erzielbaren Kraftwirkung bei gleichzeitig kompakter Bauweise.

Die Spannzylinder können dabei Spannbacken aufweisen, deren Kontur zur Erzielung einer möglichst großen Verspannung an die Form der Querträger angepasst ist. Weiterhin kann, um eine besonders große Reibung zwischen den Querträgern und den Spannbacken zu erzielen, eine Beschichtung und/oder Profilierung an den entsprechenden kontaktierenden Bereichen der Querträger und/oder der Spannbacken vorgesehen sein.

Erfindungsgemäß sind bei wenigstens einem der Querträger auf gegenüberliegenden Seiten Spannelemente, insbesondere Spannzylinder, vorgesehen. Diese Konstruktion ist vorteilhaft im Hinblick auf die Stabilität des Aufbaus. Die Spannzylinder können dabei prinzipiell in jeder Richtung angeordnet sein. Um Rüttelbewegungen in vertikaler Richtung auszugleichen, ist aber insbesondere eine Anordnung der Spannzylinder an Ober- und Unterseite der Querträger bevorzugt. Die gegenüberliegenden Spannzylinder sind bevorzugt in Verschieberichtung versetzt zueinander, so dass eine Verkippung entsteht, welche den Querträger zusätzlich fixiert.

Eine besonders stabile Verspannung kann erreicht werden, wenn pro Querträger jeweils vier Spannzylinder vorgesehen sind.

Eine weitere Stabilitätserhöhung kann schließlich dadurch erzielt werden, dass bei wenigstens einem der Querträger in Verschieberichtung an unterschiedlichen Positionen Spannelemente, insbesondere Spannzylinder, vorgesehen sind.

Ein Führungsholm des Querträgers kann prinzipiell jede Form, insbesondere auch eine runde Form, aufweisen. Bevorzugt ist aber, wenn der Führungsholm des Querträgers im Querschnitt eckig, insbesondere viereckig, ausgebildet ist. Hierdurch vereinfacht sich einerseits der Aus- und Zusammenbau von Querträger und Raupenträger, andererseits können die Spannbacken der Spannzylinder einfacher gestaltet werden.

Bei einer bevorzugten Ausführungsform der Erfindung sind zum Verschieben der Querträger Hydraulikzylinder vorgesehen, die prinzipiell direkt an den Raupenträgern angelenkt sein können. Der jeweilige Hydraulikzylinder kann aber auch einerseits mit dem zugehörigen Querträger direkt und andererseits mit dem Mittelteil verbunden sein. Üblicherweise weist jeder Querträger ein oder zwei Hydraulikzylinder auf.

Jeder Raupenträger ist vorzugsweise an zwei Querträgern befestigt. In bestimmten Fällen können aber auch nur ein oder mehrere Querträger pro Raupenträger vorgesehen sein.

Weitere Vorteile und Eigenschaften des erfindungsgemäßen Raupenfahrwerks werden nachstehend unter Bezugnahme auf die beigefügten schematischen Figuren beschrieben.

### Dort zeigt

- Fig. 1: eine schematische, teilweise geschnittene Teilansicht eines erfindungsgemäßen Raupenfahrwerks; und
- Fig. 2: eine Schnittansicht entlang der Linie 2-2 in Figur 1.

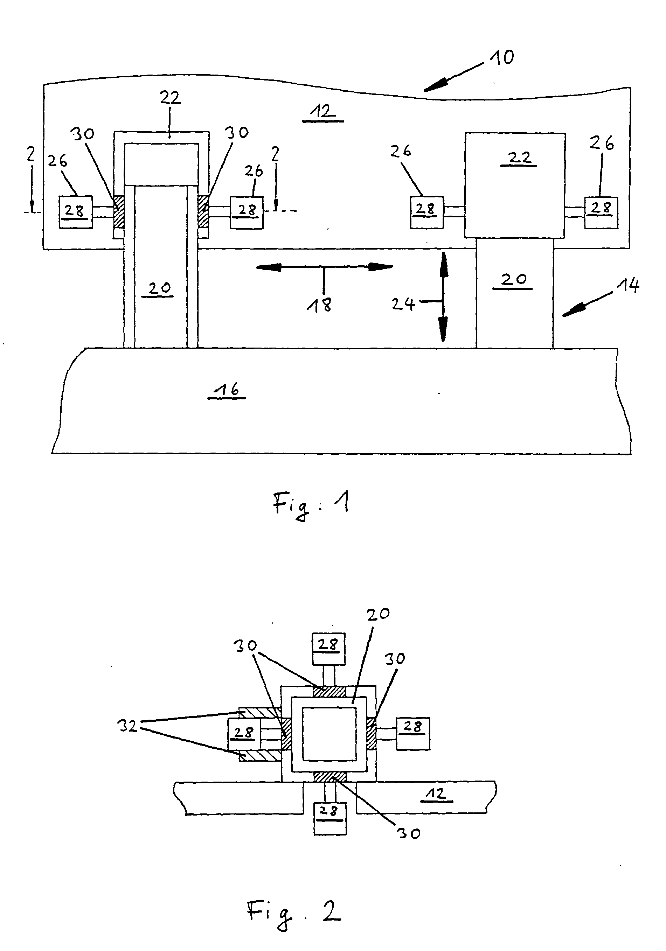

Figur 1 zeigt in schematischer, teilweise geschnittener Teilansicht ein erfindungsgemäßes Raupenfahrwerk 10 mit einem Mittelteil 12, an dem über Querträger 20 ein sich in einer Längsrichtung 18 erstreckender Raupenträger 14 mit einer Raupe 16 befestigt ist. Die Querträger 20 sind jeweils in Führungen 22, die an dem Mittelteil 12 befestigt sind, in einer Verschieberichtung 24 verschiebbar gelagert. Die Querträger 20 und die Führungen 22 sind jeweils aus einem Vierkant-Stahlprofil gefertigt. Zur Verstellung einer Spurweite des Raupenfahrwerks 10 können die Raupenträger 14 in Verschieberichtung 24 mit Hilfe von Hydraulikzylindern, die zur besseren Übersichtlichkeit in Figur 1 nicht dargestellt sind, aus- und eingefahren werden.

Um eine möglichst starre Verbindung zwischen den Querträgern 20 und den jeweiligen Führungen 22 zu gewährleisten, sind an den Führungen 22 jeweils vier Spannelemente 26 vorgesehen.

Im gezeigten Ausführungsbeispiel handelt es sich dabei um Spannzylinder 28 mit Spannbacken 30. Die Spannzylinder 28 sind mit Hilfe von Befestigungselementen 32 an den Führungen 22 befestigt. Dies ist schematisch in der Schnittansicht in Figur 2 dargestellt, wobei zur besseren Übersichtlichkeit nur zwei Befestigungselemente 32 gezeigt sind. Identische Komponenten sind in Fig. 2 mit denselben Bezugszeichen wie in Fig. 1 gekennzeichnet.

Die Spannzylinder 28 wirken von jeweils gegenüberliegenden Seiten sowohl in Horizontal- als auch in Vertikalrichtung auf den Querträger 20 ein, wodurch eine besonders stabile Verspannung erzielt wird. Ein Passungsspiel zwischen Querträger 20 und zugehöriger Führung 22 wird dadurch weitestgehend vermieden. Dadurch werden insbesondere beim Ar beiten mit einer Rütteleinrichtung erhebliche Erleichterungen erreicht.

Die Spannzylinder 28 können prinzipiell beliebig verspannt und entspannt werden. Bevorzugt ist aber ein Betriebsmodus, bei dem die Spannzylinder 28 immer verspannt sind, es sei denn, die Raupenträger 14 werden aus- oder eingefahren.

## Patentansprüche

1. Raupenfahrwerk, insbesondere für eine Baumaschine, mit einem Mittelteil (12) und zwei Raupenträgern (14) mit je einer Raupenkette (16), wobei die Raupenträger (14) entlang einer Längsrichtung (18) zu beiden Längsseiten des Mittelteiles (12) angeordnet und an Querträgern (20) befestigt sind, die jeweils über mindestens eine Führung (22) an dem Mittelteil (12) in einer Veschieberichtung (24) verschiebbar gelagert sind, wobei mindestens ein Spannelement (26) vorgesehen ist, mit dem ein Querträger (20) gegenüber seiner Führung (22) quer zur Verschieberichtung (24) verspannbar ist,
**dadurch gekennzeichnet,**
**dass** bei wenigstens einem der Querträger (20) an gegenüberliegenden Seiten Spannelemente (26) vorgesehen sind.

2. Raupenfahrwerk nach Anspruch 1,
**dadurch gekennzeichnet,**
**dass** die Spannelemente (26) als hydraulisch betätigbare Spannzylinder (28) ausgebildet sind.

3. Raupenfahrwerk nach Anspruch 2,
**dadurch gekennzeichnet,**
**dass** die Spannzylinder (26) in vertikaler Richtung an einer Ober- und einer Unterseite der Querträger (20) angeordnet sind.

4. Raupenfahrwerk nach einem der Ansprüche 2 oder 3,
**dadurch gekennzeichnet,**
**dass** pro Querträger (20) jeweils vier Spannzylinder (28) vorgesehen sind.

5. Raupenfahrwerk nach einem der Ansprüche 2 bis 4,
**dadurch gekennzeichnet,**
**dass** bei wenigstens einem der Querträger (20) in Verschieberichtung (24) an unterschiedlichen Positionen Spannzylinder (28) vorgesehen sind.

6. Raupenfahrwerk nach einem der Ansprüche 2 bis 5,
**dadurch gekennzeichnet,**
**dass** die Spannzylinder (28) Spannbacken (30) aufweisen.

7. Raupenfahrwerk nach Anspruch 6,
**dadurch gekennzeichnet,**
**dass** die Spannbacken (30) und/oder die Querträger (20) mit einer Beschichtung und/oder einer Profilierung versehen sind.

8. Raupenfahrwerk nach einem der Ansprüche 1 bis 7,
**dadurch gekennzeichnet,**
**dass** ein Führungsholm des Querträgers (20) im Querschnitt eckig, insbesondere viereckig, ausgebildet ist.

9. Raupenfahrwerk nach einem der Ansprüche 1 bis 8,
**dadurch gekennzeichnet,**
**dass** jeder Raupenträger (14) an zwei Querträgern (20) befestigt ist.

10. Raupenfahrwerk nach einem der Ansprüche 1 bis 9,
**dadurch gekennzeichnet,**
**dass** zum Verschieben der Raupenträger (14) Hydraulikzylinder vorgesehen sind.

## Claims

1. Crawler running gear, particularly for a construction machine, having a central section (12) and two crawler supports (14) with in each case a crawler track (16), the crawler supports (14) being positioned in a longitudinal direction (18) on both longitudinal sides of the central section (12) and being fixed to cross members (20), which are in each case displaceably mounted in a displacement direction (24) on said central section (12) by means of at least one guide (22), wherein at least one clamping element (26) is provided with which a cross member (20) can be braced at right angles to the displacement direction (24) with respect to its guide (22),
**characterized in that**
for at least one of the cross members (20)clamping elements (26) are provided on facing sides.

2. Crawler running gear according to claim 1,
**characterized in that**
the clamping elements (26) are constructed as hydraulically operable clamping cylinders (28).

3. Crawler running gear according to claim 2,
**characterized in that**
the clamping cylinders (26) are arranged in the vertical direction on a top and a bottom of the cross members (20).

4. Crawler running gear according to claim 2 or 3,
**characterized in that**
there are four clamping cylinders (28) for each cross member (20).

5. Crawler running gear according to claim 2 to 4,
**characterized in that**
for at least one of the cross members (20) clamping cylinders (28) are provided at different positions in the displacement direction (24).

6. Crawler running gear according to claim 2 to 5,
**characterized in that**
the clamping cylinders (28) have clamping jaws (30).

7. Crawler running gear according to claim 6,
**characterized in that**
the clamping jaws (30) and/or the cross members (20) are provided with a coating and/or a profiling.

8. Crawler running gear according to claim 1 to 7,
**characterized in that**
a guide strut of the cross member (20) is given a cross-sectional angular, particularly rectangular construction.

9. Crawler running gear according to claim 1 to 8,
**characterized in that**
each crawler support (14) is mounted on two cross members (20).

10. Crawler running gear according to claim 1 to 9,
**characterized in that**
hydraulic cylinders are provided for the displacement of the crawler supports (14).

## Revendications

1. Train de roulement à chenilles, en particulier pour engin de chantier, avec une partie centrale (12) et deux supports (14) de chenilles avec chacune une chenille (16), les supports (14) de chenilles étant placés le long d'une direction longitudinale (18) des deux côtés longitudinaux de la partie centrale (12) et étant fixés sur des supports transversaux (20) qui sont montés mobiles dans une direction de déplacement (24) sur la partie centrale (12) chacun par l'intermédiaire d'au moins un guidage (22), au moins un élément de serrage (26) étant prévu, avec lequel un support transversal (20) peut être serré par rapport à son guidage (22) transversalement à la direction de déplacement (24), ***caractérisé en ce que***, pour au moins l'un des supports transversaux (20), des éléments de serrage (26) sont prévus sur des côtés opposés.

2. Train de roulement à chenilles selon la revendication 1, ***caractérisé en ce que*** les éléments de serrage (26) sont conformés en vérins de serrage (28) actionnables hydrauliquement.

3. Train de roulement à chenilles selon la revendication 2, ***caractérisé en ce que*** les vérins de serrage (26) sont placés dans la direction verticale sur une face supérieure et une face inférieure des supports transversaux (20).

4. Train de roulement à chenilles selon l'une quelconque des revendications 2 ou 3, ***caractérisé en ce que*** quatre vérins de serrage (28) sont prévus pour chaque support transversal (20).

5. Train de roulement à chenilles selon l'une quelconque des revendications 2 à 4, ***caractérisé en ce que***, pour au moins l'un des supports transversaux (20), des vérins de serrage (28) sont prévus en différentes positions dans la direction de déplacement (24).

6. Train de roulement à chenilles selon l'une quelconque des revendications 2 à 5, ***caractérisé en ce que*** les vérins de serrage (28) comprennent des mâchoires de serrage (30).

7. Train de roulement à chenilles selon la revendication 6, ***caractérisé en ce que*** les mâchoires de serrage (30) et/ou les supports transversaux (20) sont munis d'un revêtement et/ou d'un profilage.

8. Train de roulement à chenilles selon l'une quelconque des revendications 1 à 7, ***caractérisé en ce qu'***une barre de guidage du support transversal (20) est réalisée avec une section anguleuse, en particulier rectangulaire.

9. Train de roulement à chenilles selon l'une quelconque des revendications 1 à 8, ***caractérisé en ce que*** chaque support (14) de chenille est fixé sur deux supports transversaux (20).

10. Train de roulement à chenilles selon l'une quelconque des revendications 1 à 9, ***caractérisé en ce que*** des vérins hydrauliques sont prévus pour déplacer les supports (14) de chenilles.
